# EUROPÄISCHE PATENTSCHRIFT

(11) **EP 1 138 189 B1**
(45) Veröffentlichungstag und Bekanntmachung des Hinweises auf die Patenterteilung: **31.01.2007**
(21) Anmeldenummer: 01105604.1
(22) Anmeldetag: 06.03.2001
(51) Int. Cl.: A01F 15/07

(54) **Rundballenpresse mit Wickelvorrichtung**
Rotobaler with wrapping device
Presse à balles rondes avec enrubanneuse

(30) Priorität: 31.03.2000 DE 20005963 U
(43) Veröffentlichungstag der Anmeldung: 04.10.2001
(73) Patentinhaber: Kverneland Gottmadingen GmbH & Co. KG, 78244 Gottmadingen (DE)
(72) Erfinder: Kaeppeler, J., 78333 Stockach (DE)
(74) Vertreter: Grünecker, Kinkeldey, Stockmair & Schwanhäusser Anwaltssozietät

(56) Entgegenhaltungen:
- EP-A- 0 543 145
- EP-A- 0 875 136
- EP-A- 0 983 720
- DE-A- 4 243 406
- GB-A- 2 221 203
- US-A- 4 362 097
- US-A- 5 165 332
- US-A- 5 622 104

## Beschreibung

Die Erfindung betrifft eine landwirtschaftliche Maschine gemäß dem Oberbegriff des Anspruchs 1.

Bei der aus DE-C-198 06 460 bekannten Maschine lässt sich das Fahrwerk in Längsrichtung der Maschine verstellen. Falls nämlich der Wickler arbeitet und ein umwickelter Ballen durch eine Kippbewegung des Wickeltisches nach hinten abgeworfen wird, tritt vorne an der Maschine eine spürbare Entlastung auf, die zum Hochkippen der Maschine im Zugdeichselbereich bzw. zu einer unerwünschten Entlastung der Schlepperhinterachse führt. Diesem nachteiligen Effekt wird dadurch entgegengewirkt, dass das Fahrwerk an der Maschine so weit wie möglich nach hinten verstellt wird. Die Verstellbarkeit des Fahrwerks ist jedoch eine aufwendige und teure Maßnahme.

Das Dokument, GB-A-2221203, offenbart auch eine Maschine mit allen Merkmalen des Oberbegriffs des Anspruchs 1.

Der Erfindung liegt die Aufgabe zugrunde, eine landwirtschaftliche Maschine der eingangs genannten Art auf baulich einfache Weise so zu verbessern, dass der Einfluss des Gewichtes des umwickelten Ballens auf die Kippstabilität der Maschine minimiert wird.

Die gestellte Aufgabe wird mit den Merkmalen des Anspruchs 1 gelöst.

Die Steuervorrichtung blockiert die Bewegung des Wickeltisches zum Abwerfen des gewickelten Ballens solange, bis in der Presskammer ein vorbestimmter Füllungsgrad oder ein bestimmtes Ballengewicht erreicht worden ist. Auf diese Weise wird ein durch die Gewichtskraft in der Presskammer erzeugtes Gegendrehmoment gegen das beim Abwerfen des umwickelten Ballens entstehende Kippmoment eingesetzt, um die Kippstabilität der Maschine in dieser Arbeitsphase zu erhöhen. Es wird bewusst von der üblichen Vorgangsweise abgewichen, einen fertig umwickelten Ballen sofort vom Wickeltisch abzulegen, unabhängig davon, welche Verhältnisse gerade in der Presskammer der Rundballenpresse vorliegen. Da ein umwickelter Ballen solange nicht das ausladende Ende des Wickeltisches belastet, als nicht gleichzeitig durch einen ausreichend großen oder schon kurz vor dem Auswerfen befindlichen Ballen in der Presskammer ein Gegengewicht vorhanden ist, kann der umwickelte Ballen die Maschine nicht mehr kippen. Denn die Gewichtskraft des Ballens in der Presskammer wirkt dem Kippmoment beim Abwerfen des umwickelten Ballens entgegen und stabilisiert die Maschine. Als Resultat dieser Zwangssteuerung wird ein umwickelter Ballern immer erst dann abgeworfen, wenn gleichzeitig ein neuer Ballen in der Presskammer fertig oder nahezu fertig ist. Es lässt sich das Fahrwerk optimal nahe dem Vorderende der Maschine fest einbauen. In anderen Worten wird mit dem Abwerfen eines umwickelten Ballens jeweils solange gewartet, bis in der Presskammer eine ausreichend große Gewichtskraft vorhanden ist, die über das Fahrwerk ein Gegenmoment zu dem durch den umwickelten Ballen beim Abwerfen erzeugten Kippmoment bewirkt.

Die Steuervorrichtung verwertet die Information, die das Erreichen eines vorbestimmten Wicklungsgrades oder Ballengewichts in der Presskammer bestätigt, zweckmäßigerweise den maximalen Füllungsgrad bzw. das maximale Ballengewicht, und betätigt den Stelltrieb dann oder gibt erst dann den Stelltrieb zu der Abwerfbewegung des umwickelten Ballens frei.

Die erforderliche Information für die Steuervorrichtung zum Betätigen oder Freigeben des Stelltriebes wird besonders einfach über eine Ballenwiegevorrichtung im Bereich der Presskammer bereitgestellt.

Alternativ kann die Information auch über einen Ballengrößensensor bereitgestellt werden, beispielsweise einen Schalter, der durch eine dem Anwachsen der Ballengröße folgende Presskomponente in der Presskammer betätigt wird.

Als weitere Alternative könnte auch wenigstens ein Drucksensor die erforderliche Information für die Steuervorrichtung beschaffen, der den Druck misst oder das Erreichen einer Druckschwelle anzeigt, der bzw. die sich aus der Beaufschlagung einer Presskomponente in der Presskammer oder der Heckklappe ergibt. Bei einer Ballenpresse, die die Ballenformung aufgrund einer Druckmessung, z.B. an der Heckklappe, unterbricht und auf der Basis dieser Druckmeldung oder des Drucksignals die Heckklappe öffnet, kann dieses Drucksignal gleichzeitig besonders einfach verwendet werden, über die Steuervorrichtung auch den Stelltrieb des Wickeltisches zu betätigen oder zur Betätigung freizugeben.

Zweckmäßig weist der Stelltrieb wenigstens einen Hydraulikzylinder auf, der über Steuerventileinrichtung betätigbar ist. Die Steuervorrichtung wirkt auf die Steuerventileinrichtung ein, sobald in der Backenpresse in der Presskammer der vorbestimmte Füllungsgrad bzw. das vorbestimmte Ballengewicht erreicht worden ist. Die vorerwähnten Maßnahmen können auch wahlweise kombiniert werden.

Alternativ könnte auch eine mechanische Steuervorrichtung verwendet werden, die, beispielsweise über ein Gestänge oder einen Seilzug, einen Sperrmechanismus des Stelltriebs oder des Drehtisches löst, sobald der vorbestimmte Füllungsgrad oder das vorbestimmte Ballengewicht erreicht ist.

Das Fahrwerk kann einachsig oder doppelachsig ausgebildet sein. Es wird mit seinem Kipppunkt (bei einem Doppelachsfahrwerk mit Pendelabstützung mit der Pendelachse) so weit vorne angeordnet, dass der Gesamtschwerpunkt der Maschine bei einem auf dem Wickeltisch befindlichen Ballen und einem in der Presskammer befindlichen Ballen in etwa oberhalb der Kippachse oder geringfügig vor der Kippachse liegt. Ohne Verwendung aufwendiger Hilfsvorrichtungen wird somit die Kippgefahr gebannt und eine optimale Position des Fahrwerks hinsichtlich der Manövrierbarkeit und der Handhabung der Maschine ermöglicht.

Anhand der Zeichnung werden Ausführungsformen des Erfindungsgegenstandes erläutert. Es zeigen:
- Fig. 1: eine schematische Seitenansicht einer landwirtschaftlichen Maschine, und
- Fig. 2: eine Detailvariante zu Fig. 1.

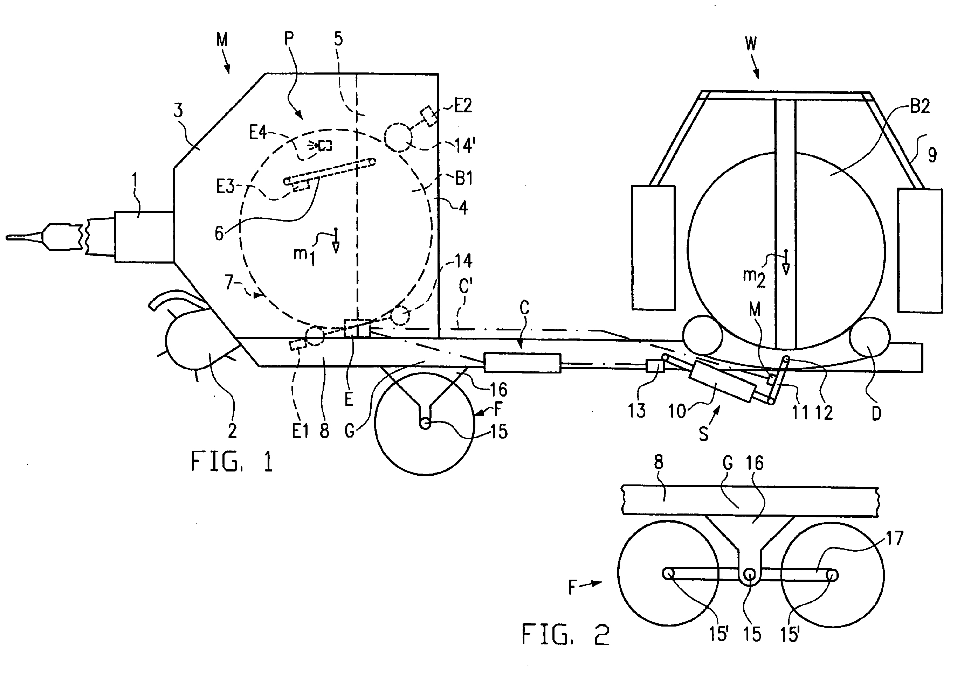

Eine landwirtschaftliche Maschine M in Fig. 1 umfasst eine Rundballenpresse P und einen in Fahrtrichtung dahinter angeordneten Wickler W, die gemeinsam auf einem Rahmen 8 angeordnet und auf einem gemeinsamen Fahrwerk F abgestützt sind. Obwohl dies nicht gezeigt ist, kann der Wickler W von der Rundballenpresse P trennbar sein. Übergabeeinrichtungen, die einen von der Rundballenpresse P ausgeworfenen Ballen B1 in den Wickler W überführen, sind der Einfachheit halber nicht dargestellt.

Die Maschine M wird mit einer Zugdeichsel 1 an einen nicht gezeigten Schlepper angeschlossen. Das Erntegut wird über eine Pick-up-Vorrichtung 2 aufgenommen und in einem Gehäuse 3 der Rundballenpresse P in eine Presskammer 7 gefördert. Ein Schneidwerk (nicht gezeigt) kann vorgesehen sein. Die Presskammer 7 wird hinten von einer Heckklappe 4 begrenzt, die beispielsweise um eine Achse 5 in Fig. 1 entgegen dem Uhrzeigersinn aus der gezeigten Schließstellung hochgeklappt werden kann, um den fertigen Ballen B1 auszuwerfen. Zum Öffnen, Schließen und Geschlossenhalten der Heckklappe 4 können Hydraulikzylinder 6 vorgesehen sein.

Der Wickler W weist unter anderem einen Wickeltisch D auf, auf welchem ein fertiger Ballen B2, z.B. um seine Achse, drehbar ist, während er gleichzeitig mittels einer Wickelvorrichtung 9 mit Wickelmaterial umwickelt wird. Der Wickeltisch D des Wicklers W ist beispielsweise um eine Querachse 12 nach vorne und nach hinten kippbar. Für die Kippbewegung ist ein Stelltrieb S verantwortlich, beispielsweise wenigstens ein Hydraulikzylinder 10, der sich im Rahmen 8 abstützt und beispielsweise über einen Hebel 11 an der Achse 12 des Wickeltisches D angreift. Der Wickeltisch D wird nach vorne gekippt, um einen Ballen zu übernehmen, und wird zum Abwerfen des umwickelten Ballens nach hinten gekippt, bis der umwickelte Ballen B2 über das Hinterende des Wickeltisches D abgelegt wird.

Alternativ wäre es möglich, den Stelltrieb S so auszulegen, dass er direkt am umwickelten Ballen B2 angreift und diesen gegebenenfalls ohne Kippung des Wickeltisches nach hinten wegbefördert.

In Fig. 1 ist für den Hydraulikzylinder 10 eine Steuerventileinrichtung 13 vorgesehen, die das Aus- und Einfahren des Hydraulikzylinders 10 in üblicher Weise steuert.

In der Presskammer 7 sind Presskomponenten 14, 14' vorgesehen, die der im Wachsen befindliche Ballen B1 beaufschlagt. Beispielsweise ist die Presskomponente 14 an einem Schwenkarm befestigt, der mit zunehmender Ballengröße weiter verschwenkt wird. Die Presskomponente 14' ist beispielsweise eine Presswalze, gegen die der wachsende Ballen B1 drückt.

An der Maschine M ist eine Steuervorrichtung C vorgesehen, die den Stelltrieb S betätigt oder zumindest die Freigabe des Stelltriebs S steuert. Die Steuervorrichtung C ist mit wenigstens einer Abtasteinrichtung E, E1, E2, E3, oder E4 der Rundballenpresse P verbunden, wobei die Abtasteinrichtung den Füllungsgrad und/oder das Ballengewicht in der Presskammer 7 misst oder überwacht und ein Signal an die Steuervorrichtung C übermittelt, sobald ein vorbestimmter Füllungsgrad oder ein vorbestimmtes Ballengewicht erreicht worden ist, zweckmäßigerweise der maximale Füllungsgrad bzw. das maximale Ballengewicht.

Die Abtasteinrichtung E ist eine Ballenwiegevorrichtung im Bereich der Presskammer 7. Alternativ könnte die Abtasteinrichtung E1 ein Schalter oder Sensor sein, der auf den Arbeitshub der Presskomponente 14 anspricht. Eine weitere Möglichkeit wäre ein Drucksensor als Abtasteinrichtung E3, mit dem der vom Ballen B1 auf die Heckklappe 4 ausgeübte Öffnungsdruck abgegriffen wird. Weiterhin ist es möglich, die Abtasteinrichtung E4 als Ballengrößensensor oder vom wachsenden Ballen betätigter Schalter auszubilden. Schließlich ist es auch möglich, den Druck des Ballens gegen die Presskomponente 14' mit einem die Abtasteinrichtung E2 definierenden Drucksensor zu ermitteln.

Als nicht gezeigte Alternative könnte auch ein Messvorrichtung für die Belastung des Fahrwerks F als Abtasteinrichtung vorgesehen sein, oder jegliche Art eines Sensors, der den Füllungsgrad und/oder das Ballengewicht in der Presskammer 7 direkt oder indirekt feststellt.

Als weitere, mechanische Alternative einer Steuervorrichtung C' ist eine mechanische Betätigungsverbindung zwischen der Abtasteinrichtung, z.B. E, und einem Sperrmechanismus M des Stelltriebs S bzw. des Wickeltisches T denkbar, die den Wickeltisch D erst dann zur Verstellung freigibt, wenn der vorbestimmte Füllungsgrad bzw. das vorbestimmte Ballengewicht in der Presskammer erreicht ist.

Bei der Maschine M in Fig. 1 ist ein einachsiges Fahrwerk F mit einer Aufhängung 16 und einer die Kippachse der Maschine darstellenden Radachse 15 verwendet. Die Kippachse ist so weit wie möglich nach vorne gesetzt, d.h. so, dass sie bei gefüllter Presskammer 7 und auf dem Wickeltisch D befindlichem Ballen B2 unterhalb oder knapp hinter dem Gesamtschwerpunkt G der Maschine liegt.

Zu Fig. 2 ist ein mehrachsiges Fahrwerk F verwendet, beispielsweise ein zweiachsiges Pendelfahrwerk mit beabstandeten Radachsen 15' und einer Pendelachse 15 an der Aufhängung 16 am Rahmen 8. Die Pendelachse 15 liegt in etwa unter dem Gesamtschwerpunkt G oder knapp hinter diesem.

### Funktion:

Auf dem Wickeltisch D des Wicklers W wird der Ballen B2 umwickelt. Sobald die Umwicklung aufgebracht ist, wird der Wickler W stillgesetzt. Der Steuervorrichtung C wird gemeldet, welcher Füllungsgrad bzw. welches Ballengewicht m1 in der Presskammer vorliegt. Die Steuervorrichtung C blockiert die Betätigung des Stelltriebs S solange, bis die Bestätigung vorliegt, dass der Füllungsgrad bzw. das Ballengewicht wie vorbestimmt erreicht wurde. Die Gewichtskraft m1 des Ballens B1 in der Presskammer 7 erzeugt um die Kippachse 15 ein Gegenmoment zum Kippmoment, das durch die Gewichtskraft m2 des Ballens B2 im Wickler W erzeugt wird. Sobald diese Kondition vorliegt, wird der Stelltrieb S freigegeben oder betätigt und der umwickelte Ballen B2 abgeworfen. Die Heckklappe 4 wird zweckmäßigerweise erst geöffnet, wenn der umwickelte Ballen B2 abgeworfen worden ist.

Der Befehl zum Abwerfen des umwickelten Ballens B2 kann vom Maschinenführer gegeben oder automatisch erzeugt werden, sobald die Umwicklung abgeschlossen ist. Die Steuervorrichtung C blockiert jedoch die Abwurfbewegung solange, bis die Bestätigung des vorbestimmten Füllungsgrades und/oder Ballengewichts in der Presskammer 7 vorliegt. Auch eine automatische Steuerung ist möglich, derart, dass die Steuervorrichtung C automatisch das Abwerfen des fertig umwickelten Ballens B2 dann einsteuert, wenn der vorbestimmte Wicklungsgrad bzw. das vorbestimmte Ballengewicht in der Presskammer 7 erreicht ist.

## Patentansprüche

1. Landwirtschaftliche Maschine (M), umfassend eine Rundballenpresse (P) und einen Wickler (W) auf einem gemeinsamen Fahrwerk (F), wobei die Rundballenpresse eine Presskammer (7) zum Ballenformen und der Wickler (W) einen Wickeltisch (D) und einen Stelltrieb (S) zum Abwerfen eines umwickelten Ballens (B2) aufweisen, **dadurch gekennzeichnet, dass** eine Steuervorrichtung (C, C') vorgesehen ist, die mit dem Stelltrieb (S) und mit wenigstens einer Abtasteinrichtung (E, E1 bis E4) für den Füllungsgrad oder das Ballengewicht (m1) in der Presskammer (7) verbunden ist, um die Abwerfbewegung oder eine Freigabe der Abwerfbewegung des umwickelten Ballens (B2) bis zum Erreichen eines vorbestimmten Füllungsgrades oder Ballengewichts in der Presskammer (7) zu blockieren.

2. Maschine nach Anspruch 1, **dadurch gekennzeichnet, dass** die Abtasteinrichtung wenigstens eine im Bereich der Presskammer (7) angeordnete Ballenwiegevorrichtung (E) aufweist.

3. Maschine nach Anspruch 1, **dadurch gekennzeichnet, dass** die Abtasteinrichtung wenigstens einen Ballengrößensensor (E1, E4, E2) aufweist, beispielsweise einen auf den Arbeitshub einer Ballen-Presskomponente (14, 14') ansprechenden Schalter oder Sensor.

4. Maschine nach Anspruch 1, **dadurch gekennzeichnet, dass** die Abtasteinrichtung einen Drucksensor (E2, E1, E3) für den an der Heckklappe (4) der Ballenpresse (P) und/oder einer Presskomponente (14', 14) und/oder in der Presskammer (7) erzeugten Ballendruck aufweist.

5. Maschine nach Anspruch 1, **dadurch gekennzeichnet, dass** der Stelltrieb (S) wenigstens einen über ein Steuerventil (13) betätigbaren Hydraulikzylinder (10) aufweist, und **dass** die Steuervorrichtung (C) mit dem Steuerventil (13) verbunden ist.

6. Maschine nach Anspruch 1, **dadurch gekennzeichnet, dass** die Steuervorrichtung (C') mechanisch ausgebildet ist und eine mechanische Betätigungsverbindung (C') zwischen der Abtasteinrichtung (E, E1 bis E4) und einem Sperrmechanismus (M) des Stelltriebs (S) bzw. des Wickeltisches (D) aufweist.

7. Maschine nach Anspruch 1, **dadurch gekennzeichnet, dass** das Fahrwerk (F) einachsig oder doppelachsig ausgebildet ist und seine Kippachse (15) an der Maschine (M) in etwa unter dem oder knapp hinter dem momentanen Gesamtschwerpunkt (G) angeordnet ist, der sich bei einem bestimmten Füllungsgrad und/oder Ballengewicht in der Presskammer (7) und mit einem auf dem Wickeltisch (D) angeordneten Ballen (B2) ergibt.

## Claims

1. Agricultural machine (M) comprising a round baler (P) and a wrapper (W) on common running gear (F), the round baler having a pressing chamber (7) for bale formation and the wrapper (W) having a wrapping table (D) and an adjustment drive (S) for ejecting a wrapped bale (B2), **characterised in that** a control device (C, C') is provided which is connected to the adjustment drive (S) and to at least one scanning device (E, E1 to E4) for the degree of filling or the weight of the bale (m1) in the pressing chamber (7) in order to block the ejection movement or release of the ejection movement of the wrapped bale (B2) until a prescribed degree of filling or weight of the bale in the pressing chamber (7) is achieved.

2. Machine according to claim 1, **characterised in that** the scanning device has at least one bale weighing device (E) which is disposed in the region of the pressing chamber (7).

3. Machine according to claim 1, **characterised in that** the scanning device has at least one bale size sensor (E1, E4, E2), for example a switch or sensor, which responds to the operating stroke of a bale-pressing component (14, 14').

4. Machine according to claim 1, **characterised in that** the scanning device has a pressure sensor (E2, E1, E3) for the bale pressure which is produced at the tailgate (4) of the baler (P) and/or of a bale-pressing component (14, 14') and/or in the pressing chamber (7).

5. Machine according to claim 1, **characterised in that** the adjustment drive (S) has at least one hydraulic cylinder (10) which can be actuated via a control valve (13), and **in that** the control device (C) is connected to the control valve (13).

6. Machine according to claim 1, **characterised in that** the control device (C) is configured mechanically and has a mechanical actuation connection (C) between the scanning device (E, E1 to E4) and a locking mechanism (M) of the adjustment drive (S) or of the wrapping table (D).

7. Machine according to claim 1, **characterised in that** the running gear (F) has a single-axle or double-axle configuration and the tilting axle (15) thereof is disposed on the machine (M) approximately below or just behind the instantaneous overall centre of gravity (G) which is produced with a specific degree of filling and/or weight of the bale in the pressing chamber (7) and with a bale (B2) disposed on the wrapping table (D).

## Revendications

1. Machine agricole (M), comprenant une presse de balles rondes (P) et une enrubanneuse (W) sur un mécanisme de roulement commun (F), où la presse de balles rondes présente une chambre de compression (7) pour former les balles et l'enrubanneuse (W) une table à enrubanner (D) et une commande de positionnement (S) pour éjecter une balle enrubannée (B2), **caractérisée en ce qu'**un dispositif de commande (C, C') est prévu qui est relié à la commande de positionnement (S) et à au moins une installation de balayage (E, E1 à E4) du degré de remplissage ou du poids de la balle (m1) dans la chambre de compression (7) pour bloquer le mouvement d'éjection ou une libération du mouvement d'éjection de la balle enrubannée (B2) jusqu'à l'atteinte d'un degré de remplissage ou poids de balle prédéterminé dans la chambre de compression (7).

2. Machine selon la revendication 1, **caractérisée en ce que** l'installation de balayage présente au moins un dispositif de pesée de balles disposé dans la zone de la chambre de compression (7).

3. Machine selon la revendication 1, **caractérisée en ce que** l'installation de balayage présente au moins un capteur de grandeur de balle (E1, E4, E2), par exemple un commutateur ou capteur réagissant à la course de travail d'une composante de compression de balle (14, 14').

4. Machine selon la revendication 1, **caractérisée en ce que** l'installation de balayage présente un capteur de pression (E2, E1, E3) de la pression de balle produite au volet arrière (4) de la presse de balles (P) et/ou d'une composante de compression (14', 14) et/ou dans la chambre de compression (7).

5. Machine selon la revendication 1, **caractérisée en ce que** la commande de positionnement (S) présente au moins un vérin hydraulique (10) actionnable par une soupape de commande (13), et **en ce que** le dispositif de commande (C) est relié à la soupape de commande (13).

6. Machine selon la revendication 1, **caractérisée en ce que** le dispositif de commande (C') est réalisé d'une manière mécanique et présente une liaison d'actionnement mécanique (C') entre l'installation de balayage (E, E1 à E4) et un mécanisme de blocage (M) de la commande de positionnement (S) respectivement de la table à enrubanner (D).

7. Machine selon la revendication 1, **caractérisée en ce que** le mécanisme de roulement (F) est réalisé à un essieu ou à essieu double et que son axe de basculement (15) à la machine (M) est disposé à peu près sous ou légèrement derrière le point de gravité total momentané (G) obtenu lors d'un degré de remplissage et/ou poids de balle déterminé dans la chambre de compression (7) et avec une balle (B2) disposée sur la table à enrubanner (D2).
